# FASCICULE DE BREVET EUROPEEN

(11) **EP 3 383 684 B1**
(45) Date de publication et mention de la délivrance du brevet: **03.02.2021**
(21) Numéro de dépôt: 16819149.2
(22) Date de dépôt: 02.12.2016
(51) Int. Cl.: B60J 10/16, B60J 10/21, B60J 10/24, B60J 10/27, B60J 10/30, B60J 10/86

(54) **PORTE DE VÉHICULE AUTOMOBILE COMPRENANT UN JOINT D'ÉTANCHÉITÉ**
KRAFTFAHRZEUGTÜR MIT EINER DICHTUNG
MOTOR VEHICLE DOOR COMPRISING A SEAL

(30) Priorité: 02.12.2015 FR 1561711
(43) Date de publication de la demande: 10.10.2018
(73) Titulaire: Renault S.A.S., 92100 Boulogne-Billancourt (FR)
(72) Inventeur: BOUILLON, Jean-Charles, 78940 La Queue Lez Yvelines (FR)
(86) Numéro de dépôt international: PCT/FR2016/053181
(87) Numéro de publication internationale: WO 2017/093686

(56) Documents cités:
- DE-A1- 19 747 942
- DE-T2- 60 126 717
- US-A- 4 888 919
- US-A- 5 038 522

## Description

La présente invention se rapporte à une porte de véhicule automobile équipée d'un joint de double étanchéité et d'un habillage de cadre de porte.

Dans le domaine des véhicules automobiles, il est important d'assurer l'étanchéité du véhicule lorsque les ouvrants, portes et coffre, sont fermés.

Il est notamment connu, comme dans DE 197 47 942 A1, de monter sur chaque porte du véhicule un joint d'étanchéité sur le cadre de porte. Ce joint vient s'écraser contre un bord de tôle de la caisse du véhicule automobile, aussi connu sous le nom de piste d'étanchéité, lorsque la porte est fermée.

Le joint de double étanchéité faisant au moins en partie le tour du cadre de porte, il est fréquemment utilisé pour masquer la jonction entre le cadre de porte peint et l'habillage du cadre.

Cependant, les ouvertures et fermetures répétées des portes, les variations de positionnement liées notamment à la fabrication du cadre de porte et au montage de l'habillage de cadre, font que le joint et l'habillage de cadre peuvent bouger et laisser apparaître, par endroits, la jonction entre le joint de double étanchéité et l'habillage de cadre.

Or un tel défaut étant inesthétique il est source de nombreux retours du véhicule à l'atelier pour réparation. La zone étant très visible par le client lorsque la porte est ouverte, cela peut donner impression de mauvaise qualité préjudiciable.

Il existe donc un besoin pour une porte de véhicule automobile présentant une intégration améliorée du joint d'étanchéité.

On propose une porte pour véhicule automobile comprenant un cadre présentant une feuillure interne définissant une bande d'appui et comprenant un élément d'habillage du cadre présentant une bordure libre destinée à venir s'appliquer sur ladite bande d'appui, ladite porte comprenant en outre un joint d'étanchéité présentant d'une part une semelle appliquée à plat sur la bande d'appui et un bourrelet surmontant ladite semelle, et d'autre part une lèvre s'étendant latéralement en saillie depuis une jonction entre la semelle et le bourrelet, ladite lèvre présentant une extrémité libre venant s'appuyer sur ladite bordure libre de l'élément d'habillage.

Ladite bordure libre de l'élément d'habillage présente un prolongement s'étendant en retour vers ladite jonction entre la semelle et le bourrelet de manière à ce que ladite bordure libre soit en prise entre la semelle et la lèvre.

Ainsi, le prolongement en retour de la bordure libre de l'élément d'habillage permet de maintenir la lèvre en appui sur la bordure libre, notamment lors de mouvements relatifs entre l'élément d'habillage et le cadre de porte. Ceci permet d'assurer un maintien amélioré de la lèvre sur la bordure libre de l'élément d'habillage, et donc une intégration améliorée du joint sur la porte.

Selon l'invention, ladite semelle présente un bord latéral, ledit prolongement présentant un chant plat s'étendant sensiblement parallèlement en regard dudit bord latéral.

Le chant plat parallèle et en regard du bord latéral de semelle, permet à la bordure libre de pouvoir venir en butée de manière relativement uniforme contre la semelle, ce qui permet d'améliorer le masquage de la bande d'appui entre la semelle et la bordure libre.

Avantageusement, ledit prolongement présente une surface arrondie en regard de la lèvre.

Ainsi, le prolongement, présente une forme de talon, avec une surface arrondie, en forme de cou-de-pied, qui permet une installation facile de la lèvre sur le prolongement, la lèvre pouvant glisser sur l'arrondi.

En outre l'arrondi permet de ne pas abimer la lèvre lors des frottements dus aux mouvements de la bordure libre sous la lèvre.

Avantageusement, ledit chant plat de ladite bordure libre s'étend en direction de la jonction entre la semelle et le bourrelet sur une longueur comprise entre 1 mm et 2 mm, en particulier 1.5 mm. Ainsi, on peut optimiser le maintien de la lèvre sur la bordure libre.

Avantageusement, le cadre présentant une partie formant traverse supérieur et une partie formant montant latéral extérieur reliées entre elles par une partie arrondie, caractérisée en ce que ladite semelle est appliquée sur toute la longueur de ladite partie formant traverse supérieur de la porte et sur la partie arrondie.

Ainsi, on peut assurer un aspect esthétique de positionnement du joint sur le cadre optimal sur la traverse supérieur du cadre de porte.

En particulier la partie arrondie est une zone d'importants mouvements de l'élément d'habillage relativement au cadre et en même temps une zone fréquemment vue par les utilisateurs du véhicule automobile. Aussi cette zone bénéficie très avantageusement du retour de l'élément d'habillage tel que décrit.

Avantageusement, la semelle est appliquée sur au moins une portion de la partie formant le montant latéral extérieur. Ainsi, on peut optimiser le maintien du joint sur le cadre de porte partout où c'est utile de façon à garantir une finition qualitative et homogène entre ces deux pièces.

De manière connue, ladite semelle est faite d'un matériau polymère rigide. Ainsi le joint peut être fixé de manière robuste au cadre de porte par des agrafes rapportées suivant un pas régulier.

Avantageusement, ladite lèvre est faite d'un matériau polymère souple. Ainsi, la lèvre peut être remise en place ou installée sur la bordure libre plus simplement en cas de maintenance ou de changement du joint de cadre de porte.

En particulier les lèvres peuvent être faites dans le même matériau que le bourrelet de joint.

L'invention concerne aussi un véhicule automobile comprenant une porte telle que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue de face d'une porte de véhicule automobile selon un mode de réalisation de l'invention ;
- la figure 2 est une vue d'une section droite du cadre, au niveau de la traverse supérieure, de la porte selon le mode de réalisation de la figure 1 ;
- la figure 3 est un détail de la section droite de la figure 2, représentant la bordure libre d'un élément d'habillage en appui sur le cadre de porte, selon le mode de réalisation de la figure 1.

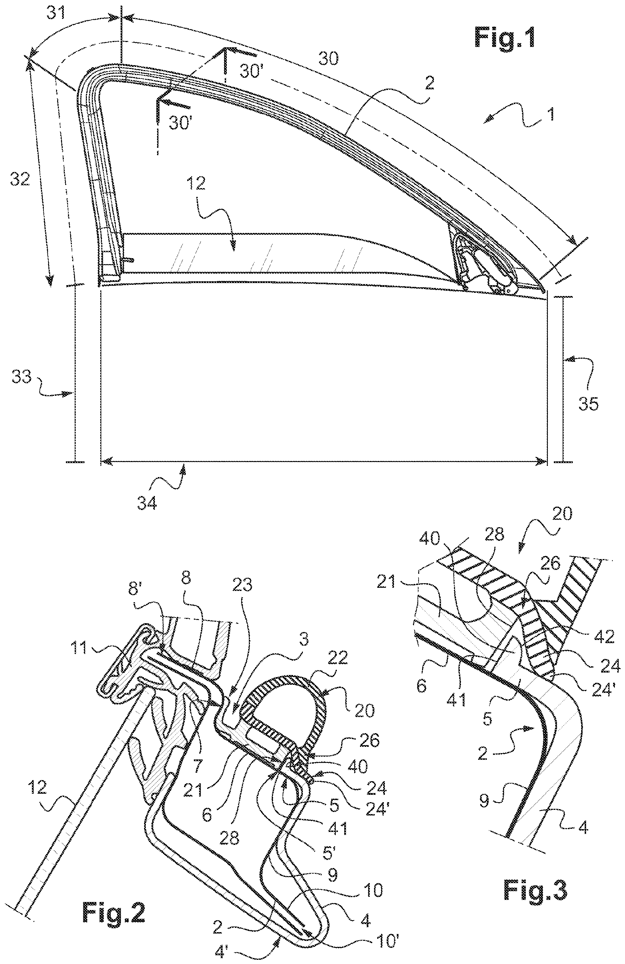

Les figures 1 à 3 se rapportant à un même mode de réalisation de l'invention, elles seront commentées simultanément.

Une porte 1 de véhicule automobile, non représenté, comprend un cadre 2 partiellement recouvert par un élément d'habillage de cadre 4.

Le cadre 2 est un élément de la porte 1, essentiellement fait de tôles embouties et soudées par points entre elles de façon à former un corps creux structurant.

Le cadre 2 présente d'une part une partie formant traverse supérieure 30, aussi appelée traverse supérieure 30, et une partie formant montant latéral extérieur 32,33, aussi appelée montant extérieur 32,33, formé d'une portion inférieure 33 et d'une portion supérieure 32 rejoignant la traverse supérieure 30 par une partie arrondie 31, et d'autre part une partie formant montant latéral intérieur 35, aussi appelée montant intérieur 35, montée à pivotement à la caisse du véhicule automobile et une partie formant traverse inférieure 34, aussi appelée traverse inférieure 34, joignant à une extrémité le montant intérieur 35 et à l'autre extrémité la portion inférieure 33 du montant extérieur 32,33.

En référence à la figure 2, le cadre 2 présente, vue d'une section droite 30' de la traverse supérieure 30 du cadre 2, une bande d'appui 6 centrale, encadrée par une première aile proximale 7 en décrochage par rapport à une première aile distale 8 et une deuxième aile proximale 9 par rapport à laquelle une deuxième aile distale 10 est en décrochage.

Autrement dit, le profil du cadre 2 est sensiblement en marches d'escalier, produisant des décrochements successifs entre, respectivement, la première aile distale 8, la première aile proximale 7, la bande d'appui 6, la deuxième aile proximale 9 et la deuxième aile distale 10.

Ainsi, le cadre 2, vue d'une section droite, présente une feuillure interne 3, entre la première aile proximale 7 et la deuxième aile proximale 9. La feuillure interne 3 définissant la bande d'appui 6.

La bande d'appui 6 présente une largeur comprise entre 10 mm et 40 mm, par exemple 26 mm.

Un joint de coulisse 11 est fixé sur une bordure extérieure 8' de la première aile distale 8.

Une vitre 12 de la porte 1 vient s'insérer dans le joint de coulisse 11 lorsque la vitre 12 est en position fermée.

Une bordure interne 10' de la deuxième aile distale 10 est entièrement recouverte par l'élément d'habillage 4.

Ainsi l'élément d'habillage 4 présente, dans une section droite en référence à la figure 2, un profil en forme de bec 4', le bec 4' venant recouvrir la bordure interne 10'.

L'élément d'habillage 4 recouvre en outre la deuxième aile proximale 9 et présente une bordure libre 5 venant s'appliquer sur la bande d'appui 6, au voisinage de la deuxième aile proximale 9.

Un joint d'étanchéité 20 est fixé sur la bande d'appui 6 et s'étend tout autour de la porte le long des portions 30, 31, 32, 33, 34 et 35.

Le joint d'étanchéité 20 est fait d'un même profil extrudé d'un seul tenant sur toute sa longueur.

Le joint 20 peut aussi, selon une alternative, être constitué de plusieurs sections de joints raboutées les unes aux autres par des surmoulages en caoutchouc aux points de jonction.

Dans un deuxième mode de réalisation, le joint d'étanchéité 20 n'est que partiel et s'étend seulement le long de la traverse 30 sur au moins une partie de la longueur de la portion supérieure 32 du montant extérieur 32,33 du cadre 2.

Le joint d'étanchéité 20 présente une semelle 21 à profil en U, reposant sur la bande d'appui 6.

La semelle 21 est faite d'un matériau polymère rigide, ou semi-rigide.

La semelle 21 est agrafée sur la bande d'appui 6.

Les agrafes sont disposées régulièrement le long de la bande d'appui 6 de manière à assurer une bonne solidarisation de la semelle 21.

Selon une alternative, la semelle 21 peut être collée ou solidarisée selon tout moyen connu de l'homme du métier, notamment pour fixer une bande polymère sur une paroi de tôle.

La semelle 21 est surmontée d'un bourrelet 22 creux, fait d'un matériau polymère souple. Le bourrelet 22 est adapté pour se déformer lors de la fermeture de la porte 1 contre une piste d'étanchéité, non représentée, en saillie de la caisse du véhicule automobile.

Le joint d'étanchéité 20 présente en outre une première lèvre 23 et une deuxième lèvre 24 latérales. La deuxième lèvre 24 est aussi nommée la lèvre 24 par opposition à la première lèvre 23 qu'on nomme aussi l'autre lèvre 23.

Les lèvres 23, 24 latérales, s'étendent latéralement sur toute la longueur du joint d'étanchéité 20.

La première lèvre 23, s'étend depuis un bord latéral de la semelle 6 en regard de la première aile proximale 7.

La première lèvre 23 est faite d'un matériau polymère souple, ou semi-rigide, par exemple du même matériau que le bourrelet 22.

La première lèvre 23 vient en appui sur la première aile proximale 7, masquant ainsi la portion de la bande d'appui 6 entre le joint 20 et la première aile proximale 7.

La première lèvre 23 présente une longueur comprise entre 1 et 8mm, par exemple 6mm.

La deuxième lèvre 24, à laquelle on se réfère donc comme étant la lèvre 24, est solidarisée à une première extrémité à la jonction 26 entre la semelle 21 et le bourrelet 22, au voisinage de la deuxième aile proximale 9.

La lèvre 24 s'étend en saillie du joint 20 et s'appuie à une seconde extrémité 24', dite extrémité libre 24', sur la bordure libre 5 de l'élément d'habillage 4.

A cet effet, la jonction 26 entre la semelle 21 et le bourrelet 22, depuis laquelle la lèvre 24 s'étend, est située au niveau d'un bord latéral du joint 20 en regard de la deuxième aile proximale 9.

Ainsi, la lèvre 24 masque le rebord 5' de la bordure libre 5 de l'élément d'habillage 4 et la portion de bande d'appui 6 entre la bordure libre 5 de l'élément d'habillage 4 et le joint 20.

En outre, la lèvre 24 participe à la stabilité latérale du joint 20 fixé à la bande d'appui 6.

La lèvre 24 présente une longueur comprise entre 1 et 8mm, par exemple 4mm.

La bordure libre 5 s'appliquant sur la bande d'appui 6 peut venir en butée contre un bord latéral de la semelle 21. Cependant, compte tenu de la souplesse de l'élément d'habillage 4, et d'une moindre mesure du cadre 2, ainsi que du jeu fonctionnel habituel pour la réalisation de chaque élément, la bordure libre 5 de l'élément d'habillage 4 peut se déplacer par rapport au cadre 2, notamment lors d'une fermeture violente de la porte 1, ou encore la section en C de l'habillage de cadre peut s'ouvrir en raison, par exemple, de la dilatation thermique de l'habillage de cadre 4 en plastique plus importante que celle du cadre 2 en métal. Ce phénomène est particulièrement présent dans la partie 31 où se rencontrent les écarts de dilatation sur la longueur de la partie 30 et celle de la partie 32.

On souhaite éviter que lors d'un mouvement relatif entre la lèvre 24 et le joint 20, celle-ci ne soit plus en appui sur la bordure libre 5 et que l'extrémité libre 24' de la lèvre 24 vienne se coincer entre la bordure libre 5 et la semelle 21 du joint 20.

En effet dans ces conditions, la lèvre 24 ne prend plus appui sur la bordure libre 5, et ne masque plus ni le rebord 5' de la bordure libre 5 de l'élément d'habillage 4 ni la portion de bande d'appui 6 entre la bordure libre 5 de l'élément d'habillage 4 et le joint 20. En outre une telle position pincée ne pouvant être obtenue que localement une ou plusieurs fois sur toute la ligne de contact entre a lèvre 24 et le bord libre 5 de l'habillage 4, ce phénomène provoque un effet discontinu d'aspect peu esthétique.

C'est pourquoi la bordure libre 5 de l'élément d'habillage 4 présente un prolongement 40 s'étendant en retour vers la jonction 26 entre la semelle 21 et la lèvre 24.

Le prolongement 40 est aussi appelé talon 40.

Le talon 40 définit d'une part un chant plat 41, sensiblement parallèle au plan dans lequel s'étend le bord latéral 28 de la semelle 21 en regard de la bordure libre 5 de l'élément d'habillage 4, et d'autre part une surface arrondie 42, en regard de la lèvre 24, en forme sensiblement de cou-de-pied.

Le chant plat 41 s'étend en direction de la jonction 26 sur une longueur comprise entre 1 mm et 5mm, ici sur une longueur de 1.5 mm.

Ainsi, le talon 40 réduisant la distance entre la bordure libre 5 de l'élément d'habillage 4 et la jonction 26, permet de maintenir la lèvre 24 en appui sur la bordure libre 5, notamment lorsque des mouvements relatifs de l'élément d'habillage 4 par rapport au cadre 2 se produisent.

De cette manière, on peut maintenir la lèvre 24 du joint 20 dans une position correcte. Ainsi la bande entre le joint 20 et la bordure libre 5 de l'élément d'habillage 4 est toujours masquée.

Le talon 40 s'étend sur toute la longueur jugée utile de la bordure libre 5 de l'élément d'habillage.

Il peut exister une alternative selon laquelle le talon 40 peut être discontinu et la bordure libre 5 peut comprendre une alternance de talons 40 et d'absence de talon 40.

## Revendications

1. Porte (1) pour véhicule automobile comprenant un cadre (2) présentant une feuillure interne (3) définissant une bande d'appui (6) et comprenant un élément d'habillage de cadre (4) présentant une bordure libre (5) destinée à venir s'appliquer sur ladite bande d'appui (6), ladite porte (1) comprenant en outre un joint d'étanchéité (20) présentant d'une part une semelle (21) appliquée à plat sur la bande d'appui (6) et un bourrelet (22) surmontant ladite semelle (21), et d'autre part une lèvre (24) s'étendant latéralement en saillie depuis une jonction (26) entre la semelle (21) et le bourrelet (22), ladite lèvre (24) présentant une extrémité libre (24') venant s'appuyer sur ladite bordure libre (5) de l'élément d'habillage (4) ;
**caractérisée en ce que** ladite bordure libre (5) de l'élément d'habillage (4) présente un prolongement (40) s'étendant en retour vers ladite jonction (26) entre la semelle (21) et le bourrelet (22) de manière à ce que ladite bordure libre (5) soit en prise entre la semelle (21) et la lèvre (24), et **en ce que** ladite semelle (21) présente un bord latéral (28), ledit prolongement (40) présentant un chant plat (41) s'étendant sensiblement parallèlement en regard dudit bord latéral (28).

2. Porte (1) pour véhicule automobile selon la revendication 1, **caractérisé en ce que** ledit chant plat (41) de ladite bordure libre (5) s'étend en direction de la jonction (26) entre la semelle (21) et le bourrelet (22) sur une longueur comprise entre 1 mm et 2 mm, en particulier 1.5 mm.

3. Porte (1) pour véhicule automobile selon l'une quelconque des revendications 1 à 2, **caractérisée en ce que** ledit prolongement (40) présente une surface arrondie (42) en regard de la lèvre (24).

4. Porte (1) pour véhicule automobile selon l'une quelconque des revendications 1 à 3, dans laquelle le cadre (2) présentant une partie formant traverse supérieur (30) et une partie formant montant latéral extérieur (32,33) reliées entre elles par une partie arrondie (31), **caractérisée en ce que** ladite semelle (21) est appliquée sur toute la longueur de ladite partie formant traverse supérieur (30) de la porte (1) et sur la partie arrondie (31).

5. Porte (1) pour véhicule automobile selon la revendication 6, **caractérisée en ce que** la semelle (21) est appliquée sur au moins une portion de la partie formant montant latéral extérieur (32,33).

6. Porte (1) pour véhicule automobile selon l'une quelconque des revendications 1 à 5, **caractérisée en ce que** ledit joint d'étanchéité (20) est d'un seul tenant sur le cadre (2).

7. Porte (1) pour véhicule automobile selon l'une quelconque des revendications 1 à 6, **caractérisée en ce que** ladite semelle (21) est faite d'un matériau polymère rigide.

8. Porte (1) pour véhicule automobile selon l'une quelconque des revendications 1 à 7, **caractérisée en ce que** ladite lèvre (24) est faite d'un matériau polymère souple.

9. Véhicule automobile **caractérisé en ce qu'**il comprend une porte (1) selon l'une quelconque des revendications 1 à 8.

## Patentansprüche

1. Tür (1) für ein Kraftfahrzeug, welche einen Rahmen (2) umfasst, der einen inneren Falz (3) aufweist, der einen Stützstreifen (6) definiert, und ein Rahmenverkleidungselement (4) umfasst, das einen freien Rand (5) aufweist, der dazu bestimmt ist, an dem Stützstreifen (6) zur Anlage zu kommen, wobei die Tür (1) außerdem eine Dichtung (20) umfasst, welche einerseits einen Fuß (21), der flächig an dem Stützstreifen (6) anliegt, und einen über dem Fuß (21) angeordneten Wulst (22) aufweist, und andererseits eine Lippe (24), die sich von einer Verbindungsstelle (26) zwischen dem Fuß (21) und dem Wulst (22) aus seitlich vorstehend erstreckt, wobei die Lippe (24) ein freies Ende (24') aufweist, das sich an dem freien Rand (5) des Verkleidungselements (4) abstützt, **dadurch gekennzeichnet, dass**
der freie Rand (5) des Verkleidungselements (4) eine Verlängerung (40) aufweist, die sich zurück zu der Verbindungsstelle (26) zwischen dem Fuß (21) und dem Wulst (22) hin erstreckt, so dass der freie Rand (5) zwischen den Fuß (21) und die Lippe (24) eingreift,
und dadurch, dass der Fuß (21) einen seitlichen Rand (28) aufweist, wobei die Verlängerung (40) eine flache Kante (41) aufweist, die sich im Wesentlichen parallel gegenüber dem seitlichen Rand (28) erstreckt.

2. Tür (1) für ein Kraftfahrzeug nach Anspruch 1, **dadurch gekennzeichnet, dass** sich die flache Kante (41) des freien Randes (5) in Richtung der Verbindungsstelle (26) zwischen dem Fuß (21) und dem Wulst (22) auf einer Länge zwischen 1 mm und 2 mm, insbesondere von 1,5 mm erstreckt.

3. Tür (1) für ein Kraftfahrzeug nach einem der Ansprüche 1 bis 2, **dadurch gekennzeichnet, dass** die Verlängerung (40) eine abgerundete Fläche (42) gegenüber der Lippe (24) aufweist.

4. Tür (1) für ein Kraftfahrzeug nach einem der Ansprüche 1 bis 3, wobei der Rahmen (2) einen Teil, der eine obere Querstrebe (30) bildet, und einen Teil, der eine äußere seitliche Stütze (32, 33) bildet, aufweist, die durch einen abgerundeten Teil (31) miteinander verbunden sind, **dadurch gekennzeichnet, dass** der Fuß (21) auf der gesamten Länge des die obere Querstrebe (30) der Tür (1) bildenden Teils und an dem abgerundeten Teil (31) anliegt.

5. Tür (1) für ein Kraftfahrzeug nach Anspruch 6, **dadurch gekennzeichnet, dass** der Fuß (21) auf wenigstens einem Abschnitt des die äußere seitliche Stütze (32, 33) bildenden Teils anliegt.

6. Tür (1) für ein Kraftfahrzeug nach einem der Ansprüche 1 bis 5, **dadurch gekennzeichnet, dass** die Dichtung (20) auf dem Rahmen (2) einstückig ausgebildet ist.

7. Tür (1) für ein Kraftfahrzeug nach einem der Ansprüche 1 bis 6, **dadurch gekennzeichnet, dass** der Fuß (21) aus einem starren Polymermaterial hergestellt ist.

8. Tür (1) für ein Kraftfahrzeug nach einem der Ansprüche 1 bis 7, **dadurch gekennzeichnet, dass** die Lippe (24) aus einem nachgiebigen Polymermaterial hergestellt ist.

9. Kraftfahrzeug, **dadurch gekennzeichnet, dass** es eine Tür (1) nach einem der Ansprüche 1 bis 8 umfasst.

## Claims

1. Motor vehicle door (1) comprising a frame (2) exhibiting an internal rebate (3) defining a bearing strip (6) and comprising a frame lining element (4) exhibiting a free edge (5) intended to be pressed against said bearing strip (6), said door (1) further comprising a seal (20) exhibiting, on the one hand, a sole (21) applied flat against the bearing strip (6) and a bulge (22) surmounting said sole (21) and, on the other hand, a lip (24) extending laterally as a projection from a junction (26) between the sole (21) and the bulge (22), said lip (24) exhibiting a free end (24') which comes to press on said free edge (5) of the lining element (4);
**characterized in that** said free edge (5) of the lining element (4) has an extension (40) extending in return toward said junction (26) between the sole (21) and the bulge (22) in such a way that said free edge (5) is sandwiched between the sole (21) and the lip (24),
and **in that** said sole (21) exhibits a lateral rim (28), said extension (40) exhibiting a flat edge face (41) extending substantially parallel facing said lateral rim (28).

2. Motor vehicle door (1) according to Claim 1, **characterized in that** said flat edge face (41) of said free edge (5) extends toward the junction (26) between the sole (21) and the bulge (22) over a length comprised between 1 mm and 2 mm, particularly of 1.5 mm.

3. Motor vehicle door (1) according to either of Claims 1 and 2, **characterized in that** said extension (40) has a rounded surface (42) facing the lip (24).

4. Motor vehicle door (1) according to any one of Claims 1 to 3, in which the frame (2) exhibiting a part forming an upper crossmember (30) and a part forming an outer lateral upright (32, 33) joined together by a rounded portion (31), **characterized in that** said sole (21) is applied to the entire length of said part forming an upper crossmember (30) of the door (1) and to the rounded portion (31).

5. Motor vehicle door (1) according to Claim 6, **characterized in that** the sole (21) is pressed against at least a portion of the part forming an outer lateral upright (32, 33).

6. Motor vehicle door (1) according to any one of Claims 1 to 5, **characterized in that** said seal (20) is of one piece on the frame (2).

7. Motor vehicle door (1) according to any one of Claims 1 to 6, **characterized in that** said sole (21) is made of a rigid polymer material.

8. Motor vehicle door (1) according to any one of Claims 1 to 7, **characterized in that** said lip (24) is made of a flexible polymer material.

9. Motor vehicle, **characterized in that** it comprises a door (1) according to any one of Claims 1 to 8.
